# FASCICULE DE BREVET EUROPEEN

(11) **EP 1 238 896 B1**
(45) Date de publication et mention de la délivrance du brevet: **02.03.2005**
(21) Numéro de dépôt: 02290579.8
(22) Date de dépôt: 08.03.2002
(51) Int. Cl.: B62D 51/00

(54) **Timon articulé pour chariot de magasinage**
Knickbare Deichsel für ein Flurförderzeug
Articulated drawbar for a load truck

(30) Priorité: 09.03.2001 FR 0103223
(43) Date de publication de la demande: 11.09.2002
(73) Titulaire: M L M, 95310 Saint Ouen L'Aumone (FR)
(72) Inventeur: Quentin, Luc, Guy, Yves, 95350 Saint Brice Sous Foret (FR)
(74) Mandataire: Lhuillier, René

(56) Documents cités:
- EP-A- 1 055 590
- CH-A- 276 936
- DE-A- 2 447 859
- FR-A- 1 348 670
- US-A- 756 670

## Description

L'invention concerne un chariot de manutention et de levage du type transpalette ou gerbeur et concerne plus précisément un timon, pour la commande et la manoeuvre du chariot.

Les chariots transpalettes motorisés sont comme on le sait utilisés par un conducteur accompagnant ou un conducteur transporté et dans ce dernier cas, ils disposent d'une plateforme fixe ou rabattable, montée à l'arrière sur le châssis de l'appareil, du côté opposé aux bras de fourches. Sur le châssis, orienté vers l'arrière, est articulé un timon de commande et de manoeuvre de l'engin, relevable par rapport au châssis et, dont l'extrémité est équipée des boutons et manettes nécessaires à l'utilisateur. Si celui-ci utilise l'appareil en étant monté sur la plateforme arrière, il relève le timon. Par contre s'il se déplace derrière, le timon sera incliné vers le bas pour être utilisable d'une position plus éloignée de l'engin. Dans les deux cas, l'utilisateur n'a pas toujours bien en main l'extrémité du timon ce qui peut nuire à la maniabilité du chariot.

Pour améliorer cela et faire en sorte que les manettes de commande soient utilisables à des distances variables de l'engin, on connaît la solution qui consiste à utiliser un timon escamotable, dont l'extrémité est télescopique et se déploie plus ou moins à partir d'un corps principal du timon. mais cette possibilité de déploiement est linéaire et ne permet pas une adaptation aux tailles et morphologies variées des utilisateurs.

On connaît par le FR 1348670 un timon articulé pour chariot à conducteur accompagnant ou porté selon le préambule des revendications 1 et 3 qui permet à la poignée de manoeuvre d'occuper une position verticale ou une position inclinée, mais cette articulation n'autorise que deux positions de la poignée.

Pour éviter ces inconvénients, en même temps que proposer un dispositif qui améliore considérablement les possibilités de commande et de manoeuvre du chariot, quelle que soit la position de l'utilisateur, sur le chariot ou à côté de lui, la Demanderesse a mis au point un timon articulé à plusieurs positions indexables de travail selon les revendications 1 ou 3.

L'invention concerne un timon articulé pour chariot de magasinage à conducteur accompagnant ou porté dont le châssis supporte une plateforme pouvant recevoir un conducteur transporté, le timon étant articulé à sa partie inférieure sur une embase solidaire du châssis et portant à sa partie supérieure des poignées de manoeuvre et des manettes de commande. Le timon est formé d'un bras inférieur monté pivotant sur l'embase solidaire du châssis, et d'un bras supérieur portant les poignées de manoeuvre et manettes qui est relié au bras inférieur par l'intermédiaire d'une articulation à plusieurs positions indexables de travail permettant audit bras supérieur de prendre une inclinaison vers l'arrière ou l'avant par rapport audit bras inférieur, qui est variable d'au moins 0 à 90°, les deux bras étant verrouillés l'un par rapport à l'autre dans la position recherchée par l'utilisateur.

Selon une caractéristique principale de l'invention l'articulation entre les deux bras comporte un bouton d'indexage qui agit sur un doigt d'indexage poussé ou tiré et déplaçable à l'encontre d'un ressort, et portant des alvéoles pour le positionnement d'un ergot solidaire d'un des bras.

D'autres caractéristiques particulières et avantages de l'invention ressortiront de la description qui va suivre d'exemples de réalisation dans lesquels il est fait référence aux dessins annexés qui représentent :
Figure 1, une vue générale en élévation d'un chariot de manutention.
Figure 2, une vue de côté, partiellement coupée, du timon articulé.
Figure 3, une vue de l'arrière du timon articulé dans la position des bras selon la représentation en traits pleins de la figure 2.
Figure 4, une vue selon IV-IV de la figure 2.
Figure 5, une vue partiellement en coupe d'une variante de réalisation de l'articulation entre les deux bras du timon articulé.
Figure 6, une vue du dessous du bouton de l'articulation selon la figure 5.
Figure 7, une vue de côté du bras inférieur avec une variante de doigt de blocage.
Figure 8, une vue agrandie du doigt selon la figure 7, en position verticale du bras.
Figure 9, une vue en coupe d'une autre variante de réalisation de l'articulation entre les deux bras du timon articulé.
Figure 10, une vue de côté de l'articulation selon la figure 9.

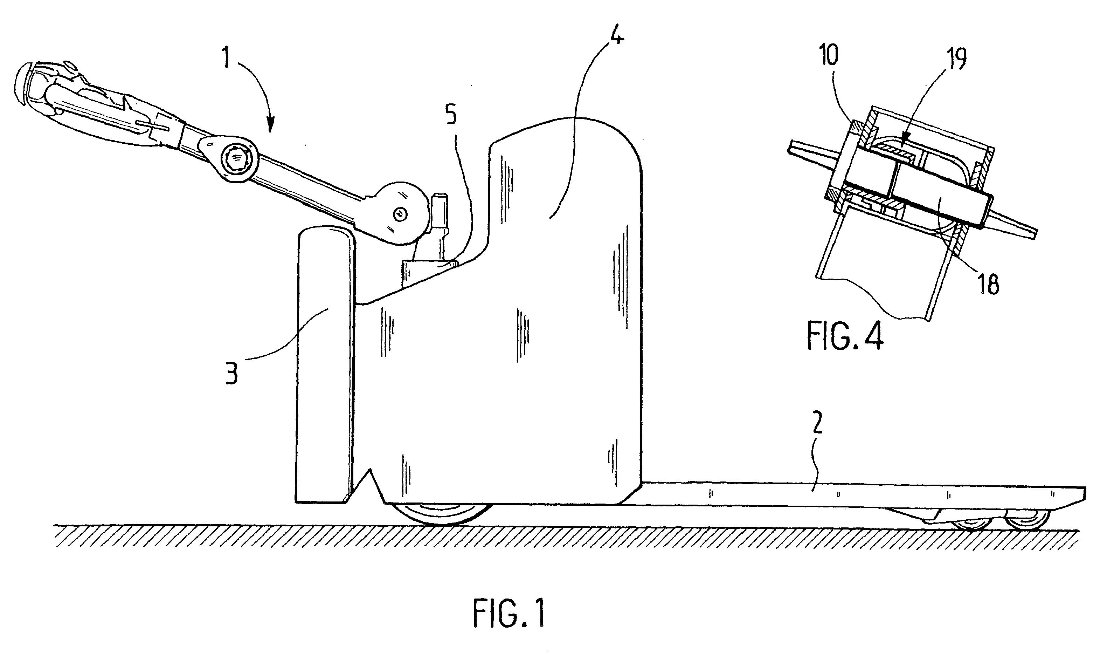

Le chariot transpalette montré à la figure 1 est essentiellement constitué d'un compartiment central 4 formant le châssis du chariot, qui supporte deux fourches 2 à l'avant, levables le long du châssis et une plateforme arrière 3 rabattable contre le compartiment central, qui peut recevoir un conducteur transporté.

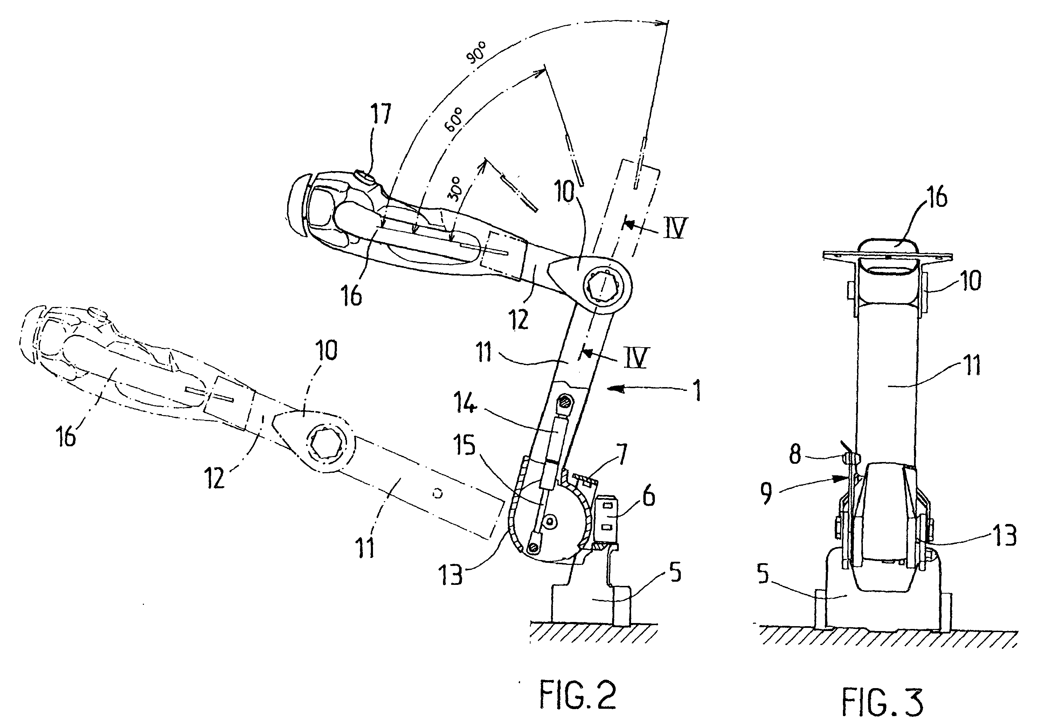

Un timon désigné dans son ensemble par la référence 1 est articulé sur une embase 5 solidaire du châssis surmonté d'un étrier-support de contacteur 6. La figure 2 montre plus précisément que le timon est formé de deux bras reliés l'un à l'autre par une articulation 10, à savoir un bras inférieur 11 et un bras supérieur 12. Le bras inférieur 11 se termine par une cloche 13 de fixation, lui permettant de pivoter par rapport à l'embase 5. Un indexage à deux positions permet d'indexer le timon en mode plateforme rabattable et donc de supprimer l'articulation du timon. Une butée fixe 7 limite le débattement du bras 11 vers l'avant. A l'intérieur de ce dernier est incorporé un vérin 14 dont la tige 15 est ancrée à la base de la cloche. Le vérin permet, en conducteur accompagnant et de façon connue en soi, de ramener automatiquement ce bras de timon en position verticale. On voit à la figure 3 que le bras 11 peut ainsi être bloqué par un doigt d'indexage 8 pénétrant dans un orifice approprié du bras, le doigt étant monté sur un levier élastique 9 susceptible d'être écarté manuellement du bras du timon.

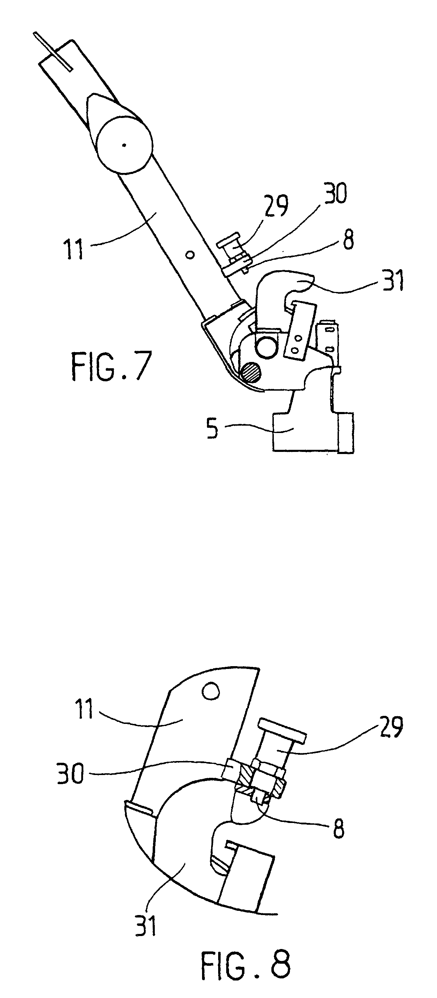

Dans la variante illustrée aux figures 7 et 8, le doigt d'indexage 8 est rétracté par un bouton 29, les deux étant montés sur un fer 30 fixé sur la partie arrière du bras inférieur 11, ledit bouton étant donc aisément accessible par un utilisateur placé en arrière du chariot. Le doigt 8, dans la position représentée à la figure 8, pénètre dans un orifice prévu sur un étrier 31 solidaire de l'embase.

Le bras supérieur 12 est équipé de poignées de manoeuvre 16 permettant à l'utilisateur de le déplacer, des boutons ou manettes de commande 17 étant disposés à proximité des poignées.

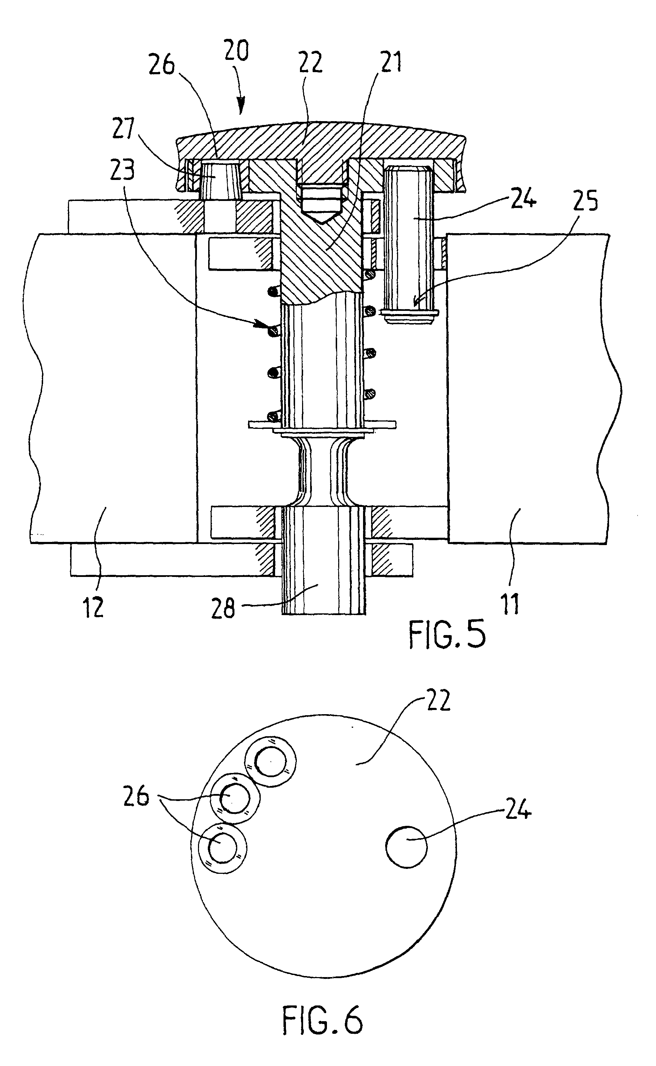

Entre les deux bras, l'articulation 10 mieux visible à la figure 4 est une articulation six pans, pourvue intérieurement d'un poussoir 18 et d'un ressort 19 de blocage en position. On a représenté en traits pleins à la figure 2 le timon avec le bras inférieur 11 en position verticale et le bras supérieur 12 à la perpendiculaire -du bras inférieur. Cette position est recherchée quand l'utilisateur est monté sur une plateforme associée à un châssis. Mais toutes positions intermédiaires du bras 12 incliné vers l'arrière par rapport au bras 11 sont évidemment possible grâce à l'articulation 10, par exemple à 30 ou 60° comme le montre la figure, et dans une plage variable d'au moins 0 à ± 90°. Sur la figure on voit en pointillés le timon dans une position où les deux bras 11,12 sont dans le prolongement l'un de l'autre ce qui correspond à la manoeuvre du chariot avec un utilisateur accompagnant. Dans cette position basse le timon est légèrement incliné vers le haut et vers l'arrière pour que l'utilisateur dispose des poignées 16 à portée de mains. Mais il peut bien entendu régler cette inclinaison par rapport à la verticale.

La figure 5 illustre une variante de réalisation de l'articulation 20 entre les bras 11 et 12 qui peuvent prendre diverses inclinaisons l'un par rapport à l'autre grâce à leur axe de pivotement 28. Un doigt d'indexage 21 est associé à un bouton 22 pouvant en poussant ou en tirant, être écarté des bras à l'encontre de la force de rappel d'un ressort 23. Le bouton porte un pion 24 terminé par une goupille d'arrêt 25, le pion pouvant coulisser dans un orifice approprié du bras inférieur 11. Il sert donc d'organe d'arrêt en rotation du doigt d'indexage, la goupille faisant butée à l'extraction intempestive du bouton. Du côté opposé au pion 24, le bouton est pourvu d'un certain nombre d'alvéoles 26 réparties sur sa périphérie comme on le voit plus précisément à la figure 6. Ces alvéoles servent de logement à un ergot unique 27 fixé au bras supérieur 12.

On comprend que pour régler l'inclinaison du bras supérieur par rapport au bras inférieur, il suffit à l'utilisateur de tirer sur le bouton 22 à l'encontre du ressort 23, ce qui a pour effet de dégager l'ergot hors de l'alvéole dans laquelle il était immobilisé. Le bras 12 peut donc pivoter librement autour de son axe 28 jusqu'à la position recherchée par l'utilisateur. Le relâchement du bouton rappelé par le ressort fera pénétrer l'ergot 27 dans une alvéole correspondant à cette position, assurant ainsi le verrouillage des bras l'un par rapport à l'autre.

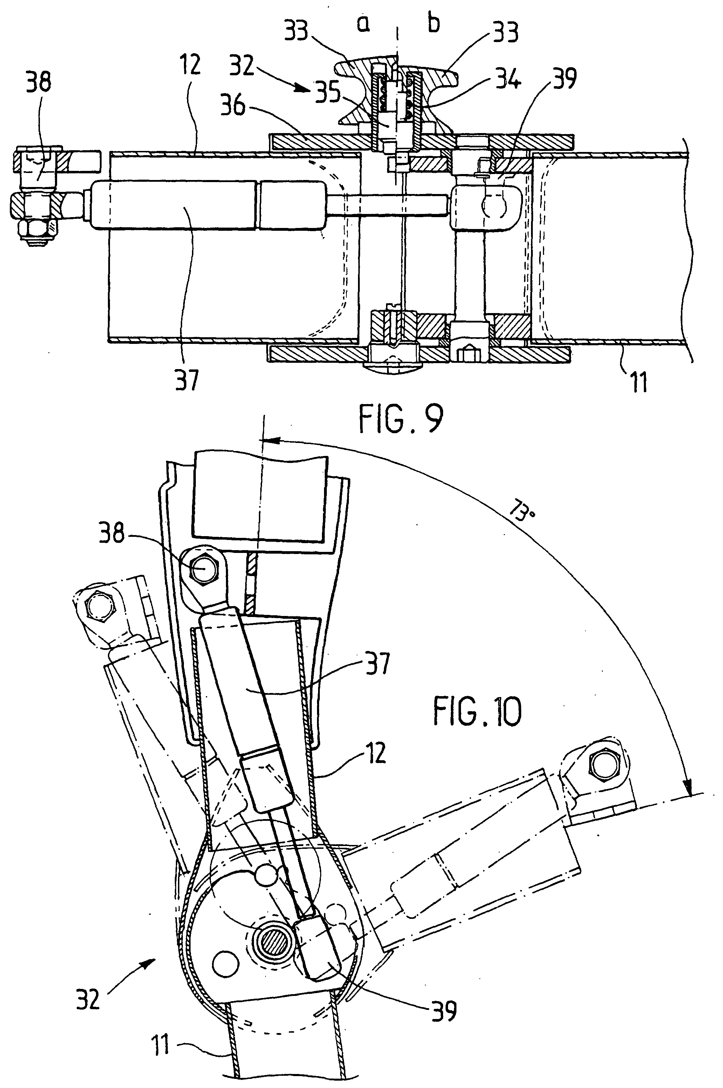

Les figures 9 et 10 illustrent une autre variante de réalisation de l'articulation 32 entre les bras 11 et 12. On y retrouve aussi un bouton d'indexage 33 pouvant occuper une position (montrée en a sur la figure 9) écartée des bras à l'encontre de la force de rappel d'un ressort 34, et une position active (montrée en b) pour laquelle son doigt d'indexage interne 35 est en prise avec une pièce 36 solidaire du bras supérieur 12. Un ressort à gaz 37 fixé au bras 12 par un axe 38 s'articule, par son extrémité opposée, sur le bras inférieur 11 par l'intermédiaire d'une rotule 39.

Le fonctionnement est sensiblement équivalent à celui décrit relativement à la figure 5.

L'utilisateur tire le bouton 33 et le tourne d'un quart de tour pour qu'il reste dans la position écartée a pour laquelle le bras 12 peut pivoter librement par rapport au bras 11. Quand la position recherchée est atteinte, l'utilisateur manoeuvre en rotation le bouton 33 jusqu'à ce que son doigt 35, sous l'action du ressort 34, verrouille la pièce 36 et les deux bras, l'un par rapport à l'autre.

Le ressort à gaz 37, lors du déverrouillage du bouton, assure le retour automatique du bras en position verticale, et une certaine contrainte au libre pivotement des bras au niveau de leur articulation 32.

La figure 10 montre en traits pleins ledit ressort 37 quand les bras 11 et 12 sont verrouillés en alignement, et en traits mixtes pour deux positions différemment inclinées du bras 12 par rapport au bras 11.

## Revendications

1. Timon articulé pour chariot de magasinage à conducteur accompagné ou porté, dont le châssis supporte une plateforme pouvant recevoir un conducteur transporté, le timon étant articulé à sa partie inférieure sur une embase solidaire du châssis, et portant à sa partie supérieure des poignées de manoeuvre et des manettes de commande, le timon (1) étant formé d'un bras inférieur (11) monté pivotant sur l'embase (5) solidaire du châssis (4), et d'un bras supérieur (12) portant les poignées (16) et les manettes de commande (17) qui est relié au bras inférieur par l'intermédiaire d'une articulation (10, 20) à plusieurs positions indexables de travail permettant audit bras supérieur de prendre une inclinaison par rapport audit bras inférieur, dans une plage qui est variable d'au moins 0 à + 90°, les deux bras étant verrouillés l'un par rapport à l'autre dans la position recherchée par l'utilisateur, **caractérisé en ce que** l'articulation (20) comporte un bouton d'indexage (22) qui agit sur un doigt d'indéxage (21), ledit bouton poussé et tiré étant déplaçable à l'encontre d'un ressort (23), et portant des alvéoles (26) pour le positionnement d'un ergot (27) solidaire d'un des bras (12).

2. Timon articulé selon la revendication 1 **caractérisé en ce que** le bouton (22) porte un pion (24) coulissant dans un orifice de l'autre bras (11), et servant d'arrêt en rotation du doigt d'indexage.

3. Timon articulé pour chariot de magasinage à conducteur accompagné ou porté, dont le châssis supporte une plateforme pouvant recevoir un conducteur transporté, le timon étant articulé à sa partie inférieure sur une embase solidaire du châssis, et portant à sa partie supérieure des poignées de manoeuvre et des manettes de commande, le timon (1) étant formé d'un bras inférieur (11) monté pivotant sur l'embase (5) solidaire du châssis (4), et d'un bras supérieur (12) portant sur les poignées (16) et les manettes de commande (17) qui est relié au bras inférieur par l'intermédiaire d'une articulation (10, 32) à plusieurs positions indexables de travail permettant audit bras supérieur de prendre une inclinaison par rapport audit bras inférieur, dans une plage qui est variable d'au moins 0 à ± 90°, les deux bras étant verrouillés l'un par rapport à l'autre dans la position recherchée par l'utilisateur, **caractérisé en ce que** l'articulation (32) comporte un bouton d'indexage (33) qui agit par un doigt d'indexage (35) sur une pièce (36) du bras supérieur (12), le bouton étant déverrouillé par une rotation en quart de tour.

4. Timon articulé selon la revendication 3, **caractérisé en ce que** un ressort à gaz (37) est fixé au bras supérieur (12) et s'articule par son extrémité opposée sur le bras inférieur (11).

5. Timon articulé selon l'une des revendications 1 ou 3, **caractérisé en ce que** le bras inférieur (11) est bloqué en position verticale par un doigt d'indexage (8) monté sur un levier élastique (9).

6. Timon articulé selon l'une des revendications 1 ou 3, **caractérisé en ce que** le bras inférieur (11) est bloqué en position verticale par un doigt d'indexage (8) pouvant être rétracté par un bouton (29), les deux étant montés sur la partie arrière dudit bras.

## Patentansprüche

1. Knickbare Deichsel eines Flurförderwagen für einen mitfahrenden oder mitgehenden Führer, dessen Fahrgestell eine Plattform für einen mitfahrenden Führer umfasst, wobei die Deichsel mit ihrem unteren Ende an einem fest mit dem Fahrgestell verbundenen Sockel angelenkt ist und an ihrem oberen Ende Bedienungsgriffe und Steuerhebel umfasst und die Deichsel (1) dabei durch einen unteren Arm (11), der schwenkbar auf den fest mit dem Gestell (4) verbundenen Sockel (5) montiert ist, und einen oberen Arm (12) gebildet wird, der die Griffe (16) und die Betätigungshebel (17) trägt und der mit dem unteren Arm durch ein Gelenk (10, 20) mit mehreren indexierbaren Arbeitsstellungen verbunden ist, die dem genannten oberen Arm ermöglichen, in Bezug auf den unteren Arm eine Neigung einzunehmen, die nach hinten oder vom um wenigstens 0 bis ± 90° variabel ist, wobei die beiden Arme in der von dem Benutzer gewünschten Stellung gegenseitig verriegelt sind,
**dadurch gekennzeichnet, dass** das Gelenk (20) einen Indexierungsknopf (22) umfasst, der auf einen Indexierungsfinger (21) einwirkt, wobei der genannte Knopf gedrückt oder gezogen gegen eine Feder (23) verschiebbar ist und Vertiefungen (26) zur Positionierung eines fest mit einem der Arme (12) verbundenen Stifts (27) umfasst.

2. Knickbare Deichsel nach Anspruch 1, **dadurch gekennzeichnet, dass** der Knopf (22) einen in eine Öffnung des anderen Arms (11) gleitenden Zapfen (24) trägt, der zur Drehblockierung des Indexierungsfingers dient.

3. Knickbare Deichsel eines Flurförderwagen für einen mitfahrenden oder mitgehenden Führer, dessen Gestell eine Plattform für einen mitfahrenden Führer umfasst, wobei die Deichsel mit ihrem unteren Ende an einem fest mit dem Gestell verbundenen Sockel angelenkt ist und an ihrem oberen Ende Bedienungsgriffe und Steuerhebel umfasst und diese Deichsel (1) dabei durch einen unteren Arm (11), der schwenkbar auf den fest mit dem Gestell (4) verbundenen Sockel (5) montiert ist, und einen oberen Arm (12) gebildet wird, der die Griffe (16) und die Bedienungshebel (17) trägt und der mit dem unteren Arm durch ein Gelenk (10, 32) mit mehreren indexierbaren Arbeitsstellungen verbunden ist, die dem genannten oberen Arm ermöglichen, in Bezug auf den unteren Arm eine Neigung einzunehmen, die nach hinten oder vom um wenigstens 0 bis ± 90° variabel ist, wobei die beiden Arme in der von dem Benutzer gewünschten Stellung gegenseitig verriegelt sind,
**dadurch gekennzeichnet, dass** das Gelenk (32) einen Indexierungsknopf (33) umfasst, der durch einen Indexierungsfinger (35) auf einen Teil (36) des oberen Arms (12) einwirkt, wobei der Knopf durch eine Vierteldrehung entblockiert wird.

4. Knickbare Deichsel nach Anspruch 3, **dadurch gekennzeichnet, dass** eine Gasfeder (37) an dem oberen Arm (12) befestigt ist und mit ihrem entgegengesetzten Ende am unteren Arm (11) angelenkt ist.

5. Knickbare Deichsel nach einem der Ansprüche 1 oder 3, **dadurch gekennzeichnet, dass** der untere Arm (11) durch einen Indexfinger (8), der an einem elastischen Hebel (9) befestigt ist, in vertikaler Position blockiert wird.

6. Knickbare Deichsel nach einem der Ansprüche 1 oder 3, **dadurch gekennzeichnet, dass** der untere Arm (11) in vertikaler Position durch einen Indexierungsfinger (8) blockiert wird, der mittels eines Knopfs (29) zurückgezogen werden kann, wobei beide auf den hinteren Teil des genannten Arms montiert sind.

## Claims

1. An articulated drawbar for a load truck for an accompanied or carried operator, the chassis of which supports a platform able to accommodate a transported operator, the drawbar being articulated at its lower part on a base secured to the chassis and bearing operating handles and control switches at its upper part, the drawbar (1) being formed by a lower arm (11) mounted pivotably on the base (5) secured to the chassis (4) and by an upper arm (12) bearing the handles (16) and the control switches (17) which is connected to the lower arm via an articulated joint (10, 20) having several indexable operating positions enabling the said upper arm to assume an inclination with respect to the said lower arm within a range which is variable from at least 0 to ± 90°, the two arms being locked relative to one another in the position desired by the user, **characterized in that** the articulated joint (20) comprises an indexing button (22) which acts on an indexing finger (21), the said push/pull button being moveable against the action of a spring (23) and having pockets (26) for positioning a lug (27) secured to one of the arms (12).

2. An articulated drawbar according to claim 1, **characterized in that** the button (22) bears a peg (24) sliding in an orifice in the other arm (11) and acting as a stop preventing rotation of the indexing finger.

3. An articulated drawbar for a load truck for an accompanied or carried operator, the chassis of which supports a platform able to accommodate a transported operator, the drawbar being articulated at its lower part on a base secured to the chassis and bearing operating handles and control switches at its upper part, the drawbar (1) being formed by a lower arm (11) mounted pivotably on the base (5) secured to the chassis (4) and by an upper arm (12) bearing the handles (16) and the control switches (17) which is connected to the lower arm via an articulated joint (10, 32) having several indexable operating positions enabling the said upper arm to assume an inclination with respect to the said lower arm within a range which is variable from at least 0 to ± 90°, the two arms being locked relative to one another in the position desired by the user, **characterized in that** the articulated joint (32) comprises an indexing button (33) which acts by way of an indexing finger (35) on a piece (36) of the upper arm (12), the button being unlocked by a quarter-turn rotation.

4. An articulated drawbar according to claim 3, **characterized in that** a gas spring (37) is fastened to the upper arm (12) and is articulated by its opposite end on the lower arm (11).

5. An articulated drawbar according to either of claims 1 and 3, **characterized in that** the lower arm (11) is blocked in the vertical position by an indexing finger (8) mounted on an elastic lever (9).

6. An articulated drawbar according to either of claims 1 and 3, **characterized in that** the lower arm (11) is blocked in the vertical position by an indexing finger (8) which can be retracted by a button (29), both being mounted on the rear part of the said arm.
